# EUROPEAN PATENT SPECIFICATION

(11) **EP 2 925 633 B1**
(45) Date of publication and mention of the grant of the patent: **09.11.2016**
(21) Application number: 12812759.4
(22) Date of filing: 30.11.2012
(51) Int. Cl.: B65D 77/22, B65D 81/34, B65D 75/52

(54) **FLEXIBLE SELF-SEALING SELF-VENTING HOT-FILL CONTAINER**
FLEXIBLER, SELBSTDICHTENDER UND SELBSTENTLÜFTENDER BEHÄLTER FÜR HEISSBEFÜLLUNG
CONTENANT SOUPLE DESTINÉ AU REMPLISSAGE À CHAUD, À AUTOSCELLAGE ET AUTOVENTILATION

(43) Date of publication of application: 07.10.2015
(73) Proprietor: Bemis Company, Inc., Neenah, WI 54956 (US)
(72) Inventor: MACK, Benjamin Paul, Appleton, WI 54913 (US)
(74) Representative: Vossius & Partner Patentanwälte Rechtsanwälte mbB
(86) International application number: PCT/US2012/067394
(87) International publication number: WO 2014/084857

(56) References cited:
- WO-A1-2004/045985
- JP-A- H10 101 154
- JP-A- H11 310 278
- JP-A- 2002 308 348
- JP-A- 2003 205 978
- US-A- 3 637 132
- US-B1- 6 596 355

## Description

### FIELD OF THE INVENTION

The present invention relates to a container used for products introduced into the container while warm or hot, as appropriate, for sanitary packaging of the product. More particularly, the present invention relates to flexible "hot-fill" containers useable in microwave and/or oven cooking, which also have a self-sealing self-venting region which ruptures as a result of elevated temperatures and/or pressure, and then reseals after expelling excess pressure from inside the container.

### BACKGROUND OF THE INVENTION

Flexible containers used for filling processes with warm or hot food products, so called "hot-fill applications", must address several fundamental concerns that are not present in conventional container applications. The ability to hot fill in sheet or film packages permits the foods to be stored without refrigeration. Commercial sterilization by hot filling imposes several additional restrictions on the choice of materials for the sheet or film structure. The heat seal must survive commercial hot-fill temperatures of above 170° F (77° C) and typically, between 170° F to 212° F (77° C to 100° C). The structure must not delaminate, shrink, or wrinkle as a result of the sterilization. The oxygen and water barrier properties must not be permanence adversely affected by the conditions of commercial sterilization. The structure must be adequately strong to permit handling of the package while still hot. The additional requirements imposed by hot filling rule out many of the materials and structures commonly used for non-restored film or sheet food packages.

One of the current market trends in food packaging is convenience, which is driven by the growing number of single household consumers who, for various reasons, do not want to cook any more, and the demand on ready meals that just have to be reheated is therefore constantly growing. Such ready meals are often "hot-fill" packed in flexible pouches. These flexible hot-fill pouches are typically formed from one or more thermoplastic sheets sealed along the edges to form an interior space. These pouches can include an opening through which an item can be placed into the package. The opening of the pouch can then be sealed to enclose the item therein. Various seals used in sealing the container normally prevent gases, such as air and moisture vapor from entering or exiting the container. In general, some level of fluids is present in the interior of the packaging article. For instance, many food products themselves may have a relatively high water content. During heating, some of this moisture may vaporize and accumulate within the interior of the packaging article. Accumulation of water vapor may result in bursting of the packaging article, such as the lid or a seam of the packaging article. Such rupturing is usually undesirable because it typically occurs when a relatively high pressure has been obtained in the package. As a result, damage to the oven or to the user may occur. At the very least, rupturing of the packaging article may result in the splattering heated food products and/or liquids within the interior of the oven. Such splattered material can be difficult to clean.

To prevent rupturing of the package, a self-venting feature is beneficial for the controlled release of internal pressure (which, in the oven environment, is not counterbalanced externally) to avoid sudden, undesirable bursting of the container and loss/splattering of its contents. Multilayer packaging materials, which rely on heat generated during the cooking process to melt a portion of the packaging film in order to provide a self-venting feature, are known in the art and described, for example, in US 6,596,355. Such layered materials require the use of low-temperature melting resins within the multilayered structure. However, these low-temperature melting resins cannot withstand the elevated temperatures required by hot filling operation. However, once the self-venting feature has been opened, hot food or liquid may leak or spill out through the self-venting feature when the package is removed from the microwave oven causing bums to the consumer.

Consequently, there remains a need in the art for materials useful in containers, including flexible pouches and plastic containers sealed with multilayer films, which are not only self-venting, but are reliably self-sealing. In other words, as soon as the expulsion of steam or air when acting on the container is released or sufficiently reduced, the exit flow channel of a seal-venting feature will automatically self-seal in order to prevent further fluid flow out of the package. Thus, leakage spills or spoilage of the package contents can be avoided. This automatic self-sealing would be a significant advantage in flexible self-venting microwavable containers and particularly, in flexible self-venting microwavable containers that have enough durability to withstand hot-fill operations.

### SUMMARY OF THE INVENTION

The present invention is associated with the discovery of containers, as well as multilayer films used in such containers, which permit the expulsion of the steam or air when heat and/or pressure is applied to the container and automatically self-seals to prevent further fluid flow, leakage, or spoilage of the contents of the container. The self-venting self-sealing containers have enough durability to withstand hot-fill operations. Such hot-fill operations typically include a temperature in the range from about 170° F (77° C) to about 212° F (100° C). These containers and films are also beneficially self-venting upon exposure to microwave heating, when the internal container pressure exceeds a threshold value, and self-sealing upon cooling the container to room temperature and/or reducing the internal pressure of the container. The self-venting and self-sealing nature of these containers arises from particular sealing characteristics, as described in greater detail below, in which the seal width differs in defined, self-venting self-sealing seal regions, relative to non-venting seal regions of a given peripheral seal. The self-venting and self-sealing nature of these containers further arises from the particular materials used in the sealant layer of the multilayer film used in such containers. Particular structural features and geometries of the self-venting, self-sealing seal regions can also be used to improve the location of venting and control of the vented gases.

Embodiments of the invention are directed to a hot-fill container comprising a peripheral seal formed by a sealant layer of a multilayer film. The peripheral seal has at least one self-venting self-sealing seal region with a minimum venting seal width that is less than a minimum non-venting seal width of a non-venting seal region. In a preferred embodiment, at least one self-venting self-seating seal region is located in a peripheral fin seal region. The peripheral seal includes all the same layers as in the multilayer film. A given peripheral seal, including its self-venting, self-sealing and non-venting seal regions, is generally formed from one type of multilayer film and one type of base material. Also, the self-venting self-sealing and non-venting seal regions are normally exposed to the same internal container environment. Therefore, with these factors being constant or approximately constant over a given peripheral seal, it is possible to vary the seal thickness and/or geometry in the different seal regions, in order to adjust the ease with which gas venting will occur and other venting characteristics. However, the practice of the present invention does not require these factors to necessarily be constant or substantially constant over the seal regions.

The sealant layer of the multilayer film generally refers to the innermost layer that is exposed to the internal contents of the container, such as food. The sealant layer is used for bonding, at adjacent bonding surfaces, with itself or another material to form a peripheral seal, normally by heat sealing. According to particular embodiments, the sealant layer is free of wax. For example, representative multilayer films, and consequently the seals formed by such films, include any film having a sealant layer comprising polyethylene, preferably metallocene polyethylene, and more preferably, between 50% to 100% by weight relative to the total weight of the sealant layer of metallocene polyethylene. The base material may be a mono-layer or multilayer film. The other material may also be a second multilayer film of the same type or of a different type as the multilayer film. For example, in embodiments in which the container is formed by folding a multilayer film upon itself and heat sealing the overlapping edges, the multilayer film and base material are necessarily the same, as are their adjacent sealing layers.

Further embodiments of the invention are directed to a hot-fill container comprising a peripheral seal formed by a sealing layer of a multilayer film. The peripheral seat in a self-venting self-sealing seal region forms an inward protrusion relative to the peripheral seal in a non-venting seal region. As discussed above, the peripheral seal is formed by a sealant layer of as multilayer film wherein the sealant layer comprises polyethylene, preferably metallocene polyethylene, and more preferable, between 50% to 100% by weight relative to the total weight of the sealant layer of metallocene polyethylene.

According to any of the above embodiments, the particular sealing characteristics advantageously provide a desired self-venting self-sealing capability to the hot-fill containers. In representative containers, gas is discharged through one or more self-venting self-sealing seal regions, as described herein, when the pressure within the container exceeds a threshold pressure. This threshold pressure is generally at least 7 kPa (1 psig *i.e., 1psi* gauge pressure, or 1 psi above the ambient, surrounding pressure, generally atmospheric), and typically at least 14 kPa (2 psig), and in some cases at least 34 kPa (5 psig).

Exemplary threshold pressure that cause the container to vent through a self-venting seal reagion are in the range from about 7 kPa (1 psig) to about 34 kPa (5 psig).

These and other embodiments and aspects relating to the present invention are apparent from the following. Detailed. Description.

### BRIEF DESCRIPTION OF THE DRAWINGS

FIG. 1a depicts plan views of representative containers having self-venting self-sealing and non-venting seal regions.
FIG. 1b depicts a side of a multilayer film of the present invention wherein the film is folded to provide a fin seal.
FIG. 2. depicts a close-up view of the self-venting self-sealing seal region of the container of FIG. ta.
FIGS. 3A-3D depict geometries of alternative self-venting self-sealing seal regions.
FIGS. 4A-4B depict cross-sectional views of multilayer films that are suitable for containers described herein.

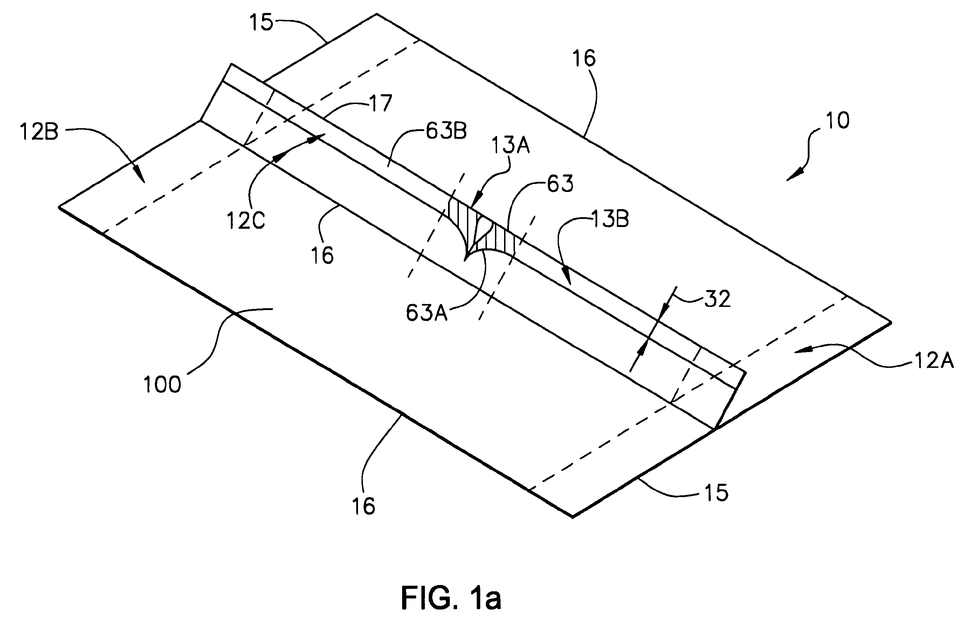

FIGS. 1a-4B are intended to illustrate embodiments of the invention by way of example, and not by way of limitation. The features referred to in these figures are not necessarily drawn to scale and should be understood to present an illustration of the invention and/or principles involved. Some features depicted have been enlarged or distorted relative to others in order to facilitate explanation and understanding. The same reference numbers are used throughout the figures to refer to similar elements and dimensions. Those skilled in the art will appreciate that features of self-venting self-sealing hot-fill containers, according to alternative embodiments of the invention, are determined, in part, by the intended application and also the environment in which they are used.

### DETAILED DESCRIPTION OF THE INVENTION

According to representative embodiments of the invention, containers have a peripheral seal proximate at least one edge. This edge can result, for example, from heat sealing overlapping portions of a single multilayer film, separate multilayer films, or a multilayer film and a container bottom that may be formed of a rigid or flexible plastic material. In the latter case, the container bottom often has a peripheral flange for sealing with the multilayer film, such that it covers the container bottom and thereby encloses the container. The container is self-venting meaning that gases can escape the container, preferably in a controlled manner, when a threshold pressure (e.g., from about 7 kPa (1 psig) to about 34 kPa (5 psig) is reached within the container. Such a pressure is normally attained upon heating the container in a microwave oven to a sufficient temperature to vaporize water or ice in the packaged food and/or cause significant expansion of the enclosed gases. The container is also self-sealing meaning that when the container has reached a sufficient temperature and/or pressure to vaporize water and has expelled gas and/or liquid through the self-venting feature, the self-venting feature subsequently reseals upon itself after cooling to room temperature and/or after the internal pressure of the container has returned to ambient conditions.

The escape of gases upon heating preferably occurs at defined, self-venting self-sealing seal regions having a particular construction (*e.g.*, in terms of seal width) and geometry (*e.g*., an inward protrusion) that can be varied to adjust the venting characteristics, including the threshold pressure, as well as the direction and even velocity of the escaping vapors.

FIG. 1a depicts an exemplary self-venting and self-sealing container 10 having peripheral ends seals 12A and 12B located at the opposite ends of the container and a peripheral fin seal 12C located between peripheral ends seals 12A and 12B.

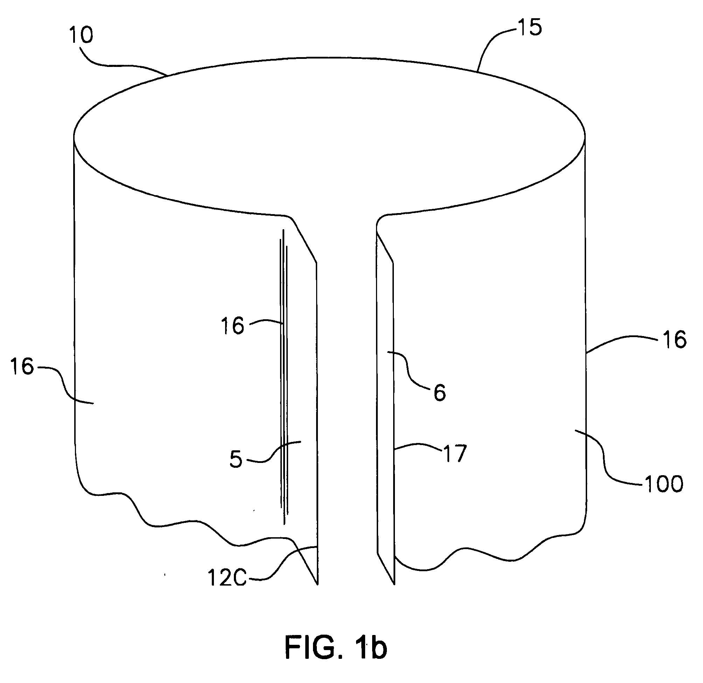

As illustrated in FIG. 1b. container 10 may be formed by folding a multilayer film 100 to bring the peripheral longitudinal edges 5 and 6 together in a fin seal configuration to create peripheral folds 16 of the container. Peripheral fin seal 12C is formed from heating and compressing overlapping layers of multilayer film 100 at the peripheral longitudinal edge 17. Peripheral ends seals 12A and 12B may then be formed from heating and compressing overlapping layers of multilayer film 100 at the peripheral edges 15 of the container. In general, however, aspects of the invention discussed herein are broadly applicable to a wide variety of container types, including pouches having at least two, end heat seals and a fin seal. In a preferred embodiment, a pillow pouch is shown.

Peripheral fin seal 12C is characterized as having self-venting self-sealing fin seal regions 13A and non-venting fin seal regions 13B, having differing seal widths along a width dimension that is perpendicular to the edge of the container along which the seal extends. Self-venting seal-sealing fin seal regions are marked in FIGS. 1a, 2-3D with diagonal line segments.

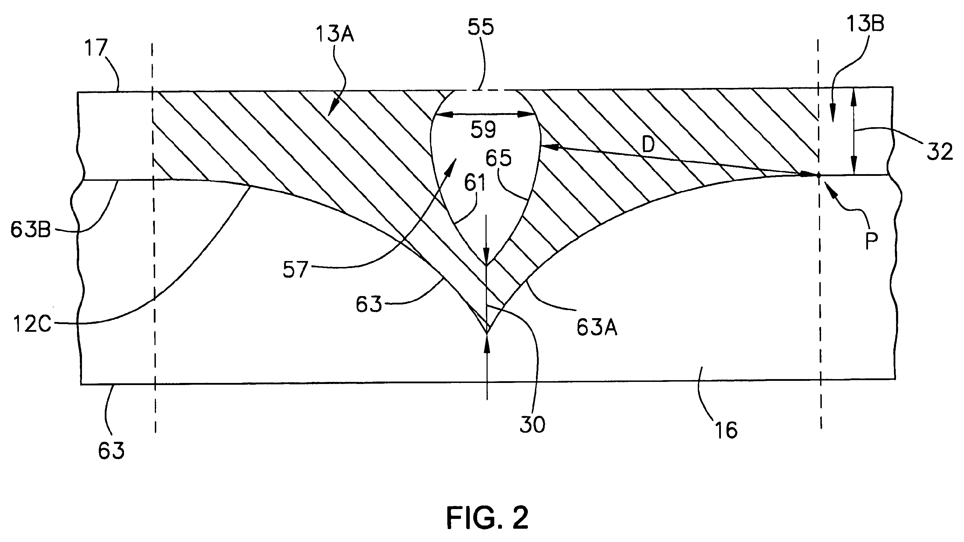

In FIG. 1a, the division between self-venting, self-sealing and non-venting fin seal regions 13A, 13B is shown with dashed lines extending through the peripheral seals, perpendicular to the container edges. FIG. 2 more clearly shows the basis for this division, with the dashed lines extending through transition point P on the inner boundary 63 of peripheral fin seal 12C. At transition point P, gas escaping the container must traverse a minimum distance D across peripheral fin seal 12C that is at least as great as the minimum non-venting seal width 32 in non-venting seal region 13B. Therefore, gas within self-venting self-sealing container 10 will require a higher pressure to escape at point P and at all other points along the inner boundary 63B of non-venting fin seal region 13B, compared to the relatively lower, threshold pressure required for gas to escape at points along the inner boundary 63A of self-venting, self-sealing fin seal region 13A.

The venting of gas is thereby advantageously confined to one or more specific regions of peripheral fin seal 12C, namely self-venting, self-sealing seal regions 13A. Moreover, the threshold pressure at which venting occurs can be adjusted by varying the characteristics of the seal (e.g., thickness and seal strength) in self-venting self-sealing fin seal region 13A. The venting of the container 10, upon exposure to sufficient microwave heating, can therefore be achieved in a controlled and desirable manner, without significant disruption, splatter, and/or loss of the container contents, to the benefit of the end user. Unlike prior art systems that rely on thermal degradation, or melting, of a film layer to achieve a self-venting property, containers according to embodiments described herein may rely on the seal geometry, including regions of varying thickness, to establish a defined venting "profile." Venting may be based on a more controllable mechanical, rather than thermal, breakage of peripheral fin seal 12C.

As illustrated in the close-up view, in FIG. 2, the minimum venting seal width 30 in self-venting self-sealing fin seal region 13A is less than the minimum non-venting seal width 32 in non-venting seal region 13B. The minimum venting seal width, corresponding to the minimum distance across the peripheral seal in self-venting self-sealing fin seal region 13A, impacts the threshold pressure, or pressure within the container (*e.g.,* under microwave heating conditions), at which the onset of venting (*i.e.,* the exiting of gases from within the container) occurs. According to representative embodiments, minimum self-venting self-sealing fin seal width 30 is generally at most about 5 mm (0.20 in) (*e.g*., from about 0.5 mm (0.020 in) to about 5 mm (0.20 in)) and typically at most about 3.2 mm (0.125 in) (*e.g.*, from about 2.4 mm (0.094 in) to about 1.2 mm (0.047 in)). The minimum non-venting non-sealing fin seal width 32 is generally at least about 1 mm (0.039 in) (*e.g.,* from about 1 mm (0.039 in) to about 10 mm (0.39 in)) and typically at least about 3.2 mm (0.125 in) (e.g., from about 3.2 mm (0.125 in) to about 7.5 mm (0.30 in)).

According to the embodiment of FIG. 2, peripheral fin seal 12C in self-venting self-sealing seal region 13A forms an inward protrusion relative to peripheral fin seal 12C in non-venting seal region 13B. This protrusion therefore extends toward the interior, for example the center, of the region defined by peripheral longitudinal edge 17 (FIG. 1a) of container 10 in fin seal region 12C. FIG. 2 illustrates how this configuration (or inward protrusion) of self-venting self-sealing seal region 13A, together with line 55 defined by edge 17 of the container in non-venting seal region 2B, define protruded area 57. Protruded area 57, in turn, defines outer boundary 65 of self-venting self-sealing seal region 13A. Protruded area 57 of FIG. 2 includes a tear-droplet shape 61, which is a substantially complete tear-droplet shape except for gas discharge opening 59. In alternative embodiments, the protruded area may include a circle, a less complete circle, such as a semi-circle, or may include some other area bounded by a curved shape, such as an ellipse or partial ellipse (*e.g*., a semi-ellipse). Otherwise, the protruded area may be a polygon.

The materials that are sealed to form edges 15 and 17 as discussed above (e.g., overlapping portions of a single multilayer film, separate multilayer films, or a multilayer film and a container bottom) may be absent from protruded area 57, for example in the case where these materials are simply punched out from peripheral fin seal 12C. According to other embodiments, these materials may be present in protruded area 57, but in an unsealed condition, or at least partly unsealed. In this case, the unsealed materials (*e.g*., urisealed multilayer films) in protruded area 57 advantageously act as guides to direct exiting (vented) vapors, for example between the unsealed materials through discharge opening 59. Preferably, these exiting vapors will therefore be directed out the side of container 10, substantially in the plane in which peripheral fin seal 12C resides.

In any of such embodiments, in which protruded area further includes gas discharge opening 59 as shown in FIG. 2, the gas discharge opening is preferably smaller (*e*.*g*., of a smaller diameter), based on the minimum distance across this opening, relative to the diameter of a partial circle or relative to the smallest diameter (e.g., along the minor axis) of the partial ellipse. According to particular embodiments, the gas discharge opening (regardless of the shape of the protruded area) is generally at least about 2 mm (0.079 in) (e.g., from about 2 mm (0.079 in) to about 15 mm (0.59 in)), and typically at least about 4 mm (0.16 in) *(e.g.,* from about 4 mm (0.16 in) to about 10 mm (0.39 in)). In comparison, the diameter of the partial circle or smallest diameter of the partial ellipse of the protruded area is generally at least about 7.5 mm (0.30 in) (e.g., from about 7.5 mm (0.30 in) to about 25 mm (1 in)) and typically at least about 10 mm (0.39 in) (e.g., from about 10 mm (0.39 in) to about 20 mm (0.79 in)). The use of a smaller gas discharge opening 59, relative to the diameter of the partial circle or smallest diameter of the partial ellipse, can provide for a more "focused" direction of exiting vapors.

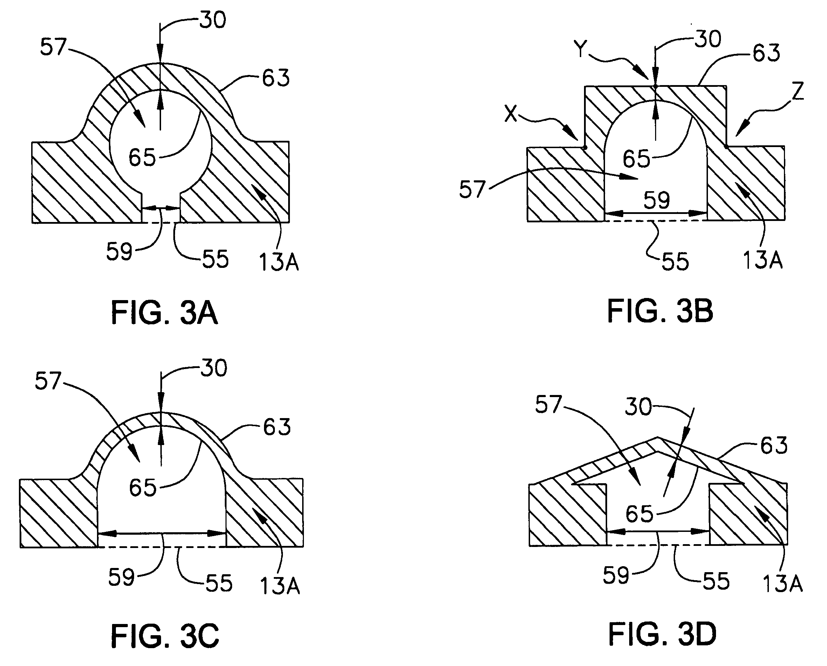

FIGS. 3A-3D, however, illustrate inward protrusions in self-venting self-sealing seal regions having alternative geometries. In FIG. 3A, the protruded area 57 includes a partial circle 61, which is a substantially complete circle except for gas discharge opening 59. FIG. 3A depicts the gas discharge opening that is smaller than the diameter a circular protruded area 57. In alternative embodiments, the protruded area may include a less complete circle, such as a semi-circle, or may include some other area bounded by a curved shape, such as an ellipse or partial ellipse (e.g., a semi-ellipse). For example, in FIGS. 3B and 3C include a gas discharge opening that is the same as the diameter of a semi-circular protruded area 57 (or the same as an axis of an elliptical protruded area 57). In FIG. 3D, the protruded area, defined by line 55 and inward protrusion of self-venting self-sealing venting seal region 13A, is a polygon having an arrow shape. As illustrated in FIGS. 3A, 3C and 3D, inner boundary 63 of self-venting seal region 13A has a shape that conforms substantially to the shape of the inward protrusion and consequently also to the shape of outer boundary 65. In these embodiments, the venting seal width is substantially constant over at least a portion of inner and outer boundaries 63, 65 and therefore over at least a portion (*e.g.,* the majority of. and possibly all) of the self-venting seal-sealing seal region. This substantially constant venting seal width, in particular, corresponds to the minimum venting seal width 30. The use of a substantially constant venting seal width 30, in this manner, adds predictability to the onset of venting, namely when a desired threshold pressure is sufficient to overcome the gas barrier corresponding to the minimum venting seal width 30.

However, it is also possible, as shown in FIG. 3B for inner boundary 63 and consequently self-venting seal region 13A to have a shape that does not conform to the shape of inward protrusion. In this case, the venting seal width varies over at least a portion (*e.g*., the majority of, and possibly all) of the self-venting self-sealing fin seal region. In the embodiment of FIG. 3B, the minimum venting seal width 30 may correspond to several discreet points X, Y, Z, on inner boundary 63, at which mechanical breakage of the seal is likely to occur, upon exposure to pressure and heat from within the container, due to microwaving of its contents. As is apparent from the particular embodiment of FIG. 3B, the protruded area 57 can include a partial circle or a partial ellipse, with inner boundary 63 of self-venting self-sealing fin seal region 13A being formed by line segments. Overall, having regard for the present specification, those skilled in the art will appreciate that the specific characteristics (including geometries, materials, and seal thicknesses) of the self-venting seal region can be varied to achieve desired venting characteristics, in terms of threshold pressure, exiting gas direction, and stability.

In addition, the multilayer films, as well as containers having such films, preferably have seal strength, stability, heat resistance, and oxygen and water vapor transmission properties that allow them to be subjected to hot-fill conditions without loss of desired functional characteristics.

Representative conditions mimicking a hot-fill heat treatment, corresponding to the above seal strength and seal strength stability properties, include exposure of the container to (1) a temperature of between 170° F to 212° F (77° C to 100° C) for 2 to 20 seconds. Furthermore, multilayer films described herein also have acceptable heat resistance, in terms of not undergoing delamination. Preferably, no delamination of the film structure is observed after the film is subjected to 212° F (100° C) for 20 seconds. Further properties of representative films include a barrier-oxygen transmission rate of generally from about 0.16 cc/M²/day (0.01 cc/100 in²/day) to about 62 cc/M²/day (4 cc/100 in²/day), and typically from about 0.16 cc/M²/day (0.01 cc/100 in²/day) to about 1.6 cc/M²/day (0.1 cc/100 in²/day) at a temperature of 23°C (73°F), and/or a barrier-water vapor transmission rate of generally from about 0.47 g/M²/day (0.03 g/100 in²/day) to about 7.8 g/M²/day (0.5 g/100 in²/day), and typically from about 0.47 g/M²/day (0.03 g/100 in²/day) to about 3.9 cc/M²/day (0.25 g/100 in²/day) at a temperature of 100°C (212°F) and 90% relative humidity.

The multilayer film comprises a sealant layer that forms a peripheral seal of the container, including the self-venting self-sealing and non-venting seal regions, as described above. In regions where the multilayer film is sealed (*e.g.,* by heat), this sealant layer is bonded to a suitable base material, such as a mono-layer or multilayer film, for example comprising polyethylene. The base material may also be another multilayer film of the same type or of a different type. For example, if the multilayer film is folded upon itself and heat sealed at overlapping edges to provide a container volume bounded by non-sealed areas of the film, the multilayer film and base material, as well as the sealing layers being bonded, are necessarily the same. In regions where the multilayer film is not sealed, the sealing layer is the innermost layer, facing the interior of the container and often contacting the container contents, such as food, directly.

A preferred sealant layer comprises (e.g., in a major amount of at least 50% by weight), or consists essentially of (1) a polyethylene or (ii) a blend of polyethylene. Preferred potyethytenes include metallocene polyethylenes. The term metallocene polyethylene denotes polymers obtained by copolymerizing ethylene and an alpha-olefin, such as propylene, butene, hexene or octene, in the presence of a monosite catalyst generally consisting of an atom of a metal which may, for example, be zirconium or titanium, and of two cyclic alkyl molecules bonded to the metal. More specifically, the metallocene catalysts are usually composed of two cyclopentadiene-type rings bonded to the metal. These catalysts are often used with aluminoxanes as cocatalysts or activators, preferably methylaluminoxane (MAO). Hafnium may also be used as a metal to which the cyclopentadiene is bound. Other metallocenes may include transition metals of groups IV A, V A and VI A. Metals of the lanthanide series may also be used. These metallocene polyethylenes may also be characterized by their M_{w}/Mₙ ratio of <3, preferably <2. A more preferred sealant layer comprises from about 50% to about 100% by weight relative to the total weight of the sealant layer of a metallocene polyethylene.

In one particular embodiment, the sealing layer comprises about 60.40% by weight of metallocene polyethylene, about 35.00% by weight linear low density polyethylene and about 4.00% by weight antiblock and slip additives. Suitable metallocene polyethylenes include, but not limited to, ATTANE® ultra low density polyethylene copolymers (Dow Chemical Company, Midland, Ml USA). A particularly suitable metallocene polyethylene is ATTANE® 4701 copolymer having a density of 0.913 g/cm³, a melt flow index of 1.00 g/10 min, and a Vicat softening point of 94° C.

The thickness of the sealing layer is generally from about 10 µm (0.39 mils) to about 500 µm (20 mils), and typicaily from about 50 µm (2 mils) to about 200 µm (7.9 mils). In addition to the sealing layer, the multilayer film further comprises an outer layer facing the exterior of the container and disposed furthest from the container contents. In the case of 2-layer films, the outer layer and sealing layer are adjacent and bonded directly to one another. In the case of films comprising further layers (*i.e.,* 3 or more total layers), the outer and sealing layers are not adjacent, but separated by these further layers, being disposed therebetween.

The total thickness of a representative, multilayer film used in a self-venting self-sealing, hot-fillable container, as described herein, is generally from about 51 µm (2 mils) to about 380 µm (15 mils), and typically from about 74 µm (2.9 mils) to about 150 µm (6 mils).

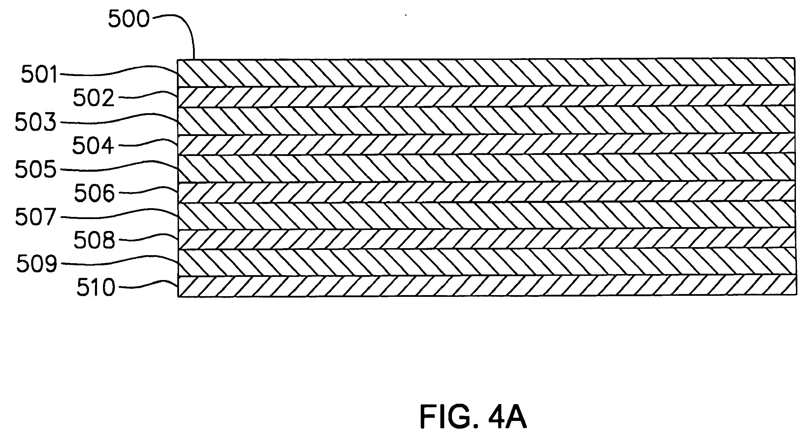

In a preferred embodiments, a cross-sectional view of a representative 10-layer film 500, for example, is depicted in FIG. 4A, having the following layers, in order: an outer layer of biaxially oriented polyethylene terephthalate 501, an anchor coat layer 502, a polyethylene layer 503, a second polyethylene layer 504, a first polyethylene/ethylene vinyl acetate blend layer 505, a first tie layer 506, an ethylene vinyl alcohol copolymer layer 507, a second tie layer 508, a second polyethylene/ethylene vinyl acetate blend layer 509, and a polyethylene sealant layer 510.

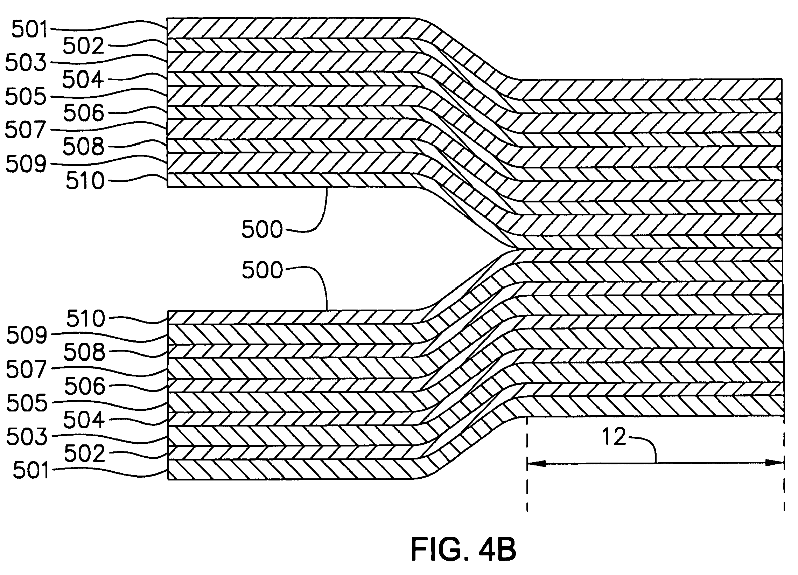

The cross-sectional view of FIG. 4B depicts the sealing between adjacent sealant layers 510, in either the self-venting region or non-venting region of peripheral seal 12 of a container as described herein. Sealing occurs between two identical 10-layer films, or otherwise a single 10-layer film that has been folded (*e.g*., with the fold not shown but occurring beyond the left side of the page). In addition to sealant layers 510, the films may also include other layers, as described above.

Overall, aspects of the invention are directed to self-venting, hot-fillable containers and multilayer films suitable for use in such containers. Characteristics of the multilayer films, in combination with characteristics of the self-venting self-sealing seal regions, provide containers having desirable venting properties as described herein. Those having skill in the art, with the knowledge gained from the present disclosure, will recognize that various changes can be made in these containers and multilayer films without departing from the scope of the present invention. Mechanisms used to explain theoretical or observed phenomena or results, shall be interpreted as illustrative only and not limiting in any way the scope of the appended claims.

The following examples are set forth as representative of the present invention. These examples are not to be construed as limiting the scope of the invention as other equivalent embodiments will be apparent in view of the present disclosure and appended claims.

### EXAMPLE 1

Specifically, the film had the following structure, from the outer to the inner (sealing or food contact) layer.
Layer 1 (outer): 12 µm (48 gauge) one-sided corona treated oriented polyethylene terephthalate (OPET)-Skyrol SP65 (SKC Inc., Covington, GA USA)
Layer 2 (anchor coat): water based lamination primer coat-Aquaforte 108W (Aqua Based Technologies, NJ, USA)
Layer 3. 100.00 wit-% low density polyethylene (LDPE)-Dow 4005 (Dow Chemical Company, Midland, MI, USA)
Layer 4. 77.80 wit-% linear low density polyethylene (LLDPE)-Exact 3133 (ExxonMobil. Chemical, Houston, TX, USA) + 10.00 wt-% low density polyethylene (LDPE)-Dow 4005 (Dow Chemical Company, Midland, MI, USA) + 12.20 wt-% additives
Layer 5. 60.00 wt-% ultra-low density polyethylene (ULDPE)-Attane NG. 4701G (Dow Chemical Company, Midland, MI, USA) + 40.00 wt-% ethylene vinyl acetate copolymer (EVA) having a 12% mole vinyl acetate content -DuPont Elvax 3135X (E. I. du Pont de Nemours and Company, Wilmington, DE, USA)
Layer 6 (1^{st} tie): 100 wt-% anhydride-modified, linear low density polyethylene (LLDPE) resins.-DuPont Bynel® 41 E687 ((E. I. du Pont de Nemours and Company, Wilmington, DE, USA)
Layer 7: 100 wit-% ethylene vinyl alcohol copolymer (EVOH)-Soamol® ET3803 (Soarus L.L.C., Arlington Heights, IL, USA)
Layer 8 (2^{nd} tie): 100 wt-% anhydride-modified, linear low-density polyethylene (LLDPE) resins-DuPont Bynel^{®} 41E687 (E. I. du Pont de Nemours and Company, Wilmington, DE, USA)
Layer 9: 60.00 wt-% linear low density polyethylene (LLDPE)-ExxonMobil™ 1001.32 (ExxonMobil Chemical, Houston, TX, USA) + 40.00 wt-% ethylene vinyl acetate copolymer (EVA) having a 5% mole vinyl acetate content - ExxonMobil™ LD 306.38 (ExxonMobil Chemical, Houston, TX, USA)
Layer 10 (sealing): 60.40 wt-% ultra-low density polyethylene (ULDPE)-Attane NG 4701 G (Dow Chemical Company, Midland, MI, USA) + 35 wt-% linear low density polyethylene (LLDPE)-ExxonMobi)™ 1001.32 ((ExxonMobil Chemical, Houston, TX, USA) density polyethylene (LDPE)-Dow 608A (Dow Chemical Company, Midland, MI USA) +4.0 wt-% additives

This 10-layer film was sealed with a first end seal, a second end seal and a fin seal to form a pillow pouch. The initial and propagation (average) re-tack seal strengths of the seal-venting self-sealing fin seal was evaluated for sample pouches after the pouch had been heated and the fin seal vented. The term "initial re-tack seal strength" refers to the force required to initiate the separation of a portion of the film from itself. The term "propagation re-tack seal strength" refers to the force required to continue the separation of a portion of the film from itself after the separation has been initiated. Values were measured according to ASTM-F88 with a crosshead speed of 2.12 cm/sec (5 in/min). The results of this testing are shown in Table 1 below.

| **TABLE 1-Retack Seal Strength** | | |
|---|---|---|
| gram-force/inch (N/m) | | |
| | Initial | Propagation |
| Ample 1 | 4061 (1568) | 2334 (901) |
| Sample 2 | 970 (375) | 457 (176) |
| Sample 3 | 1583 (611) | 568 (219) |
| Sample 4 | 1023 (395) | 628 (242) |
| Sample 5 | 2359 (911) | 1459 (563) |

This 10-layer film was sealed with a first end seal, a second end seal and a fin seal to form a pillow pouch. The threshold pressure at which gas was discharged from the self-venting self-sealing fin seal region was evaluated for sample pouches. The results of this testing are shown in Table 2 below.

| **TABLE 2-Threshold Pressure** | |
|---|---|
| psi (kPa) | |
| Sample 1 | 1.5(10.3) |
| Sample 2 | 1.8 (12.4) |
| Sample 3 | 2.0 (13.8) |
| Sample 4 | 2.4 (16.5) |
| Sample 5 | 2.3 (15.9) |

## Claims

1. A flexible microwavable container (10) comprising a peripheral fin seal (12C) formed by a sealant layer of a multilayer film (100);
said peripheral fin seal (12C) having at least one self-venting seal region (13A) with a minimum venting seal width (30) that is less than a minimum non-venting seal width (32) of a non-venting fin seal region (13B), and
wherein said at least one self-venting fin seal region ruptures when said container is heated at an elevated temperature, **characterized in that** the container is a hot-fill container and **in that** self-venting fin seal region is a self-sealing region which reseals when said container is cooled to room temperature.

2. The container of claim 1, wherein said sealant layer is free of wax.

3. The container of claim 1, wherein said minimum venting seal width is at most about 3.2 mm (0.125 inches) and said minimum non-venting seal width is at least about 3.2 mm (0.125 inches).

4. The container of claim 1, wherein said minimum venting seal width is from about 1.2 mm (0.047 inches) to about 3.2 mm (0.125 inches).

5. The container of claim 1, wherein said at least one self-venting self-sealing fin seal region forms an inward protrusion relative to said peripheral seal in said non-venting fin seal region.

6. The container of claim 5, wherein said inward protrusion, and a line (55) defined by an edge (17) of said container in said non-venting seal fin seal region, define a protruded area (57).

7. The container of claim 6, wherein said protruded area includes a tear-drop shape (61).

8. The container of claim 7, wherein said protruded area further includes a gas discharge opening (59) of a smaller diameter, relative to the diameter of said partial circle or relative to said smallest diameter of said partial ellipse.

9. The container of claim 8, wherein said diameter of said gas discharge opening is at least 4 mm (0.16 inches) and said diameter of said partial circle or said smallest diameter of said partial ellipse is at least 10 mm (0.39 inches).

10. The container of claim 6, wherein said protruded area is a polygon.

11. The container of claim 5, wherein an inner boundary (63) of said self-venting self-sealing fin seal region has a shape that conforms substantially to the shape of said inward protrusion, whereby said venting seal width is substantially constant over at least a portion of said at least one self-venting self-sealing fin seal region.

12. The container of claim 5, wherein an inner boundary (63) of said self-venting self sealing fin seal region has a shape that does not conform to said shape of said inward protrusion, whereby said venting seal width varies over at least a portion of said at least one self-venting self-sealing fin seal region.

13. The container of claim 10, wherein said protruded area includes a partial circle or a partial ellipse and an inner boundary of said at least one self-venting self-sealing fin seal region is formed by line segments.

14. The container of claim 1, wherein said sealant layer comprises between 50% to 100% by weight of polyethylene.

15. The container of claim 14, wherein said polyethylene is a metallecene polyethylene.

16. The container of claim 1, wherein said multilayer film further comprises an outer layer comprising biaxially oriented nylon or biaxially oriented polyethylene terephthalate that is optionally separated from said sealant layer by at least one other layer.

17. The container of claim 1, wherein said multilayer film has an oxygen transmission rate from about 0.01 to about 4 cc/100 in²/24 hours (about 0.155 to about 62 cc/m²/24 hours) at a temperature of 23°C (73°F).

18. The container of claim 1, wherein gas is discharged through said at least one self-venting self-sealing fin seal region when the pressure within said container exceeds a threshold pressure from about 7 kPa (1 psig) to about 34 kPa (5 psig).

19. The container of claim 1, wherein said at least one self-venting self-sealing fin seal region has an initial peak re-tack seal strength of between about 350 N/m (900 g-f/in) to about 1700 N/m (4500 g-f/in) after said self-venting self-sealing seal region ruptures and reseals upon itself.

20. The container of claim 1, wherein said at least one self-venting self-sealing fin seal region has- a propagation average re-tack seal strength of between about 120 N/m (300 g-f/in) to about 290 N/m (750 g-f/in).

21. The container of claim 1, further comprising a liquid food product container therein.

## Patentansprüche

1. Flexibler mikrowellengeeigneter Behälter (10), welcher eine durch eine Dichtungsschicht einer Mehrschichtfolie (100) gebildete periphere Randdichtung (12C) umfasst;
wobei die periphere Randdichtung (12C) mindestens einen selbstentlüftenden Dichtungsbereich (13A) mit einer minimalen entlüftenden Dichtungsbreite (30) aufweist, die kleiner ist als eine minimale nicht entlüftende Dichtungsbreite (32) eines nicht entlüftenden Randdichtungsbereichs (13B), und
wobei der mindestens eine selbstentlüftende Randdichtungsbereich reißt, wenn der Behälter auf eine erhöhte Temperatur erwärmt wird, **dadurch gekennzeichnet, dass** der Behälter ein Behälter für Heißbefüllung ist, und dass der selbstentlüftende Randdichtungsbereich ein selbstdichtender Bereich ist, welcher wieder dichtet, wenn der Behälter auf Raumtemperatur abgekühlt wird.

2. Behälter nach Anspruch 1, wobei die Dichtungsschicht frei von Wachs ist.

3. Behälter nach Anspruch 1, wobei die minimale entlüftende Dichtungsbreite höchstens etwa 3,2 mm (0,125 Zoll) ist, und die minimale nicht entlüftende Dichtungsbreite mindestens etwa 3,2 mm (0,125 Zoll) ist.

4. Behälter nach Anspruch 1, wobei die minimale entlüftende Dichtungsbreite von etwa 1,2 mm (0,047 Zoll) bis etwa 3,2 mm (0,125 Zoll) ist.

5. Behälter nach Anspruch 1, wobei der mindestens eine selbstentlüftende, selbstdichtende Randdichtungsbereich einen nach innen weisenden Vorsprung relativ zu der peripheren Dichtung in dem nicht entlüftenden Randdichtungsbereich bildet.

6. Behälter nach Anspruch 5, wobei der nach innen weisende Vorsprung und eine durch eine Kante (17) des Behälters in dem nicht entlüftenden Randdichtungsbereich definierte Linie (55) einen vorstehenden Bereich (57) definieren.

7. Behälter nach Anspruch 6, wobei der vorstehende Bereich eine Tropfenform (61) aufweist.

8. Behälter nach Anspruch 7, wobei der vorstehende Bereich ferner eine Gasauslassöffnung (59) mit einem kleineren Durchmesser relativ zu dem Durchmesser des Teilkreises oder relativ zu dem kleinsten Durchmesser der Teilellipse aufweist.

9. Behälter nach Anspruch 8, wobei der Durchmesser der Gasauslassöffnung mindestens 4 mm (0,16 Zoll) ist, und der Durchmesser des Teilkreises oder der kleinste Durchmesser der Teilellipse mindestens 10 mm (0,39 Zoll) ist.

10. Behälter nach Anspruch 6, wobei der vorstehende Bereich ein Polygon ist.

11. Behälter nach Anspruch 5, wobei eine innere Begrenzung (63) des selbstentlüftenden, selbstdichtenden Randdichtungsbereichs eine Form aufweist, die im Wesentlichen der Form des nach innen weisenden Vorsprungs entspricht, wodurch die entlüftende Dichtungsbreite über mindestens einen Teil des mindestens einen selbstentlüftenden, selbstdichtenden Randdichtungsbereichs im Wesentlichen konstant ist.

12. Behälter nach Anspruch 5, wobei eine innere Begrenzung (63) des selbstentlüftenden, selbstdichtenden Randdichtungsbereichs eine Form aufweist, die nicht der Form des nach innen weisenden Vorsprungs entspricht, wodurch die entlüftende Dichtungsbreite über mindestens einen Teil des mindestens einen selbstentlüftenden, selbstdichtenden Randdichtungsbereichs variiert.

13. Behälter nach Anspruch 10, wobei der vorstehende Bereich einen Teilkreis oder eine Teilellipse aufweist, und eine innere Begrenzung des mindestens einen selbstentlüftenden, selbstdichtenden Randdichtungsbereichs durch Liniensegmente gebildet ist.

14. Behälter nach Anspruch 1, wobei die Dichtungsschicht zwischen 50 und 100 Gewichts-% Polyethylen umfasst.

15. Behälter nach Anspruch 14, wobei das Polyethylen ein Metallocen-Polyethylen ist.

16. Behälter nach Anspruch 1, wobei die Mehrschichtfolie ferner eine äußere Schicht umfasst, die biaxial orientiertes Nylon oder biaxial orientiertes Polyethylenterephthalat umfasst, wobei die äußere Schicht gegebenenfalls von der Dichtungsschicht durch mindestens eine weitere Schicht getrennt ist.

17. Behälter nach Anspruch 1, wobei die Mehrschichtfolie eine Sauerstoffdurchgangsrate von etwa 0,01 bis etwa 4 cm³/100 Quadratzoll/24 Stunden (etwa 0,155 bis etwa 62 cm³/m²/24 Stunden) bei einer Temperatur von 23 °C (73 °F) aufweist.

18. Behälter nach Anspruch 1, wobei Gas durch den mindestens einen selbstentlüftenden, selbstdichtenden Randdichtungsbereich abgeleitet wird, wenn der Druck in dem Behälter eine Schwelle von etwa 7 kPa (1 psig) bis etwa 34 kPa (5 psig) überschreitet.

19. Behälter nach Anspruch 1, wobei der mindestens eine selbstentlüftende, selbstdichtende Randdichtungsbereich eine anfängliche maximale Wiederanhaftstärke zwischen etwa 350 N/m (900 g-f/Zoll) und etwa 1700 N/m (4500 g-f/Zoll) aufweist, nachdem der selbstentlüftende, selbstdichtende Nahtbereich reißt und wieder von selbst dichtet.

20. Behälter nach Anspruch 1, wobei der mindestens eine selbstentlüftende, selbstdichtende Randdichtungsbereich eine fortschreitende, mittlere Wiederhaftdichtstärke zwischen etwa 120 N/m (300 g-f/Zoll) und etwa 290 N/m (750 g-f/Zoll) aufweist.

21. Behälter nach Anspruch 1, welcher darin ferner einen Behälter für ein flüssiges Nahrungsmittelprodukt enthält.

## Revendications

1. Conteneur pour micro-ondes flexible (10) comprenant un joint à ailette périphérique (12C) formé par une couche d'étanchéité d'un film multicouches (100) ;
ledit joint à ailette périphérique (12C) ayant au moins une région de joint à auto-évacuation (13A) ayant une largeur de joint d'évacuation minimum (30) qui est inférieure à une largeur de joint sans évacuation minimum (32) d'une région de joint à ailette sans évacuation (13B), et
où ladite au moins une région de joint à ailette à auto-évacuation se rompt lorsque ledit conteneur est chauffé à une température élevée, **caractérisé en ce que** le conteneur est un conteneur à remplissage à chaud et **en ce que** la région de joint à ailette à auto-évacuation est une région à auto-scellage qui se referme lorsque ledit conteneur est refroidi jusqu'à température ambiante.

2. Conteneur selon la revendication 1, dans lequel ladite couche d'étanchéité est dépourvue de cire.

3. Conteneur selon la revendication 1, dans lequel ladite largeur de joint d'évacuation minimum est au plus d'environ 3,2 mm (0,125 pouce) et ladite largeur de joint sans évacuation minimum est au moins d'environ 3,2 mm (0,125 pouce).

4. Conteneur selon la revendication 1, dans lequel ladite largeur de joint d'évacuation minimum va d'environ 1,2 mm (0,047 pouce) à environ 3,2 mm (0,125 pouce).

5. Conteneur selon la revendication 1, dans lequel ladite au moins une région de joint à ailette à auto-scellage et à auto-évacuation forme une protubérance vers l'intérieur par rapport audit joint périphérique dans ladite région de joint à ailette sans évacuation.

6. Conteneur selon la revendication 5, dans lequel ladite protubérance vers l'intérieur, et une ligne (55) définie par un bord (17) dudit conteneur dans ladite région de joint à ailette de joint sans évacuation, définit une zone en saillie (57).

7. Conteneur selon la revendication 6, dans lequel ladite zone en saillie comporte une forme en goutte d'eau (61).

8. Conteneur selon la revendication 7, dans lequel ladite zone en saillie comporte en outre une ouverture de décharge gazeuse (59) d'un diamètre plus petit, par rapport au diamètre dudit cercle partiel ou par rapport audit diamètre le plus petit de ladite ellipse partielle.

9. Conteneur selon la revendication 8, dans lequel ledit diamètre de ladite ouverture de décharge gazeuse est d'au moins 4 mm (0,16 pouce) et ledit diamètre dudit cercle partiel ou ledit diamètre le plus petit de ladite ellipse partielle est d'au moins 10 mm (0,39 pouce).

10. Conteneur selon la revendication 6, dans lequel ladite zone en saillie est un polygone.

11. Conteneur selon la revendication 5, dans lequel une limite interne (63) de ladite région de joint à ailette à auto-scellage et à auto-évacuation présente une forme qui épouse sensiblement la forme de ladite protubérance vers l'intérieur, ce par quoi ladite largeur de joint d'évacuation est sensiblement constante sur au moins une portion de ladite au moins une région de joint à ailette à auto-scellage et à auto-évacuation.

12. Conteneur selon la revendication 5, dans lequel une limite interne (63) de ladite région de joint à ailette à auto-scellage et à auto-évacuation présente une forme qui n'épouse pas ladite forme de ladite protubérance vers l'intérieur, ce par quoi ladite largeur de joint d'évacuation varie sur au moins une portion de ladite au moins une région de joint à ailette à auto-scellage et à auto-évacuation.

13. Conteneur selon la revendication 10, dans lequel ladite zone en saillie comporte un cercle partiel ou une ellipse partielle et une limite interne de ladite au moins une région de joint à ailette à auto-scellage et à auto-évacuation est formée par des segments de ligne.

14. Conteneur selon la revendication 1, dans lequel ladite couche d'étanchéité comprend de 50% à 100% en poids de polyéthylène.

15. Conteneur selon la revendication 14, dans lequel ledit polyéthylène est un polyéthylène métallocène.

16. Conteneur selon la revendication 1, dans lequel ledit film multicouches comprend une couche externe comprenant du nylon à orientation biaxiale ou du téréphtalate de polyéthylène à orientation biaxiale qui est éventuellement séparé de ladite couche d'étanchéité par au moins une autre couche.

17. Conteneur selon la revendication 1, dans lequel ledit film multicouches possède un taux de transmission d'oxygène allant d'environ 0,01 à environ 4 cm³/100 pouces²/24 heures (environ 0,155 à environ 62 cm³/m²/24 heures) à une température de 23°C (73°F).

18. Conteneur selon la revendication 1, dans lequel le gaz est déchargé à travers ladite au moins une région de joint à ailette à auto-scellage et à auto-évacuation lorsque la pression au sein dudit conteneur excède une pression seuil allant d'environ 7 kPa (1 psig) à environ 34 kPa (5 psig).

19. Conteneur selon la revendication 1, dans lequel ladite au moins une région de joint à ailette à auto-scellage et à auto-évacuation possède une force de re-scellement maximale initiale allant d'environ 350 N/m (900 g-f/pouce) à environ 1700 N/m (4500 g-f/pouce) après que ladite région de joint à auto-scellage et à auto-évacuation se rompe et se scelle de nouveau sur elle-même.

20. Conteneur selon la revendication 1, dans lequel ladite au moins une région de joint à ailette à auto-scellage et à auto-évacuation possède une force de re-scellement moyenne de propagation allant d'environ 120 N/m (300 g-f/pouce) à environ 290 N/m (750 g-f/pouce).

21. Conteneur selon la revendication 1, comprenant en outre un produit alimentaire liquide y étant contenu.
